# EUROPEAN PATENT APPLICATION

(11) **EP 4 620 772 A1**
(43) Date of publication of application: **24.09.2025**
(21) Application number: 25162993.7
(22) Date of filing: 11.03.2025
(51) Int. Cl.: B61L 1/04, E01B 7/20, G01L 1/06, G01L 5/00, B61L 5/10, B61L 27/53

(54) **DETECTION UNIT TO DETECT A MOVEMENT**

(30) Priority: 20.03.2024 IT 202400006268
(71) Applicant: Tecnologie Meccaniche SpA, 00041 Albano Laziale (RM) (IT)
(72) Inventor: TINTI, Massimiliano, Roma (IT); TINTI, Vittoriano, Rome (IT); TINTI, Emanuele, Rome (IT)
(74) Representative: Bertinelli, Francesco

(57) **Abstract**

A detection unit (1), connectable to two mechanical components to detect a relative displacement beyond a pre-established threshold position along an impact direction (4), comprises a support (2), connectable to a first mechanical component, a tip (3) connectable to a second mechanical component and movable with respect to the support (2) along the impact direction (4), a plate element (5) connected to the support (2) and bearing at least one electrical circuit that mutually connects opposite ends of the plate element (5), end terminals (7) for the electrical connection of opposite ends of the electrical circuit, wherein the plate element (5) has a weakened portion (8) to determine a controlled breakage of the plate element (5) when the tip (3) impacts against the plate element (3) and exceeds a pre-established impact position with respect to the positioning of the plate element (5) along the impact direction (4).

## Description

The present invention relates to an electronic detection unit configured to detect a relative displacement between a first mechanical component and a second mechanical component, along a direction.

In particular, the detection unit according to the invention is configured to detect a possible exceeding of a pre-established relative threshold position between the two mechanical components, to which the detection unit can be operationally connected.

In the following description, explicit reference will be made to the use of an electronic detection unit included within a switching group for a railway switch, in order to detect any possible trailing of the switching group itself.

It is intended that the electronic detection unit according to the invention can be envisaged for alternative uses in which it is still necessary to detect when two mechanical components have moved mutually, smoothly, along a direction of movement, and have passed a pre-established mutual safety position.

In the railway sector, the use of a railroad switch is well known, that is, a system comprising two pairs of rails, a fixed pair, whose rails are called "stock rails" and a mobile pair, whose rails are called "switch-point rails".

The railroad switch allows a train to move from a first track to a second track, operationally connected to each other, depending on the position in which the switch-point rails are placed.

In its stable positions, the railroad switch requires that there is a switch-point rail that is "close" i.e. in contact with a corresponding contact point and a switch-point rail that is "distant" that is not in contact with a corresponding contact point. In this position, the train trolley can travel correctly on the switch.

The railroad switch operation consists in moving the switch-point rails so that the distant switch-point rail approaches the respective stock rail and the adjacent switch-point rail moves away from the respective stock rail.

The set of organs that transfer the translational motion of the switch-point rails, placed near the switch-point rails themselves, is called the "operating point".

A railroad switch includes one or more devices to lock the movable switch-point rails in position, in order to prevent them from accidentally moving during the passage of a train.

The expression "to trail a switch" or "to trail" means to indicate the passage over a railway switch from a direction opposite to that permitted by the position assumed by the switch itself.

A railroad switch can be of the "trailabe" or "non trailable" type, depending on the device that immobilizes the switch-point rails. A switch is defined as "trailable" if, following its trailing, it does not suffer damage and allows the trailed switch-point rails to move. On the contrary, a switch is defined as "non trailable" if its trailing causes damage to the switch's operating devices and, possibly, damage to the switch-point rails.

In the following description, reference will be made to an non trailable railroad switch.

In the railway industry, it is common to equip a railroad switch with one or more switches to detect the operating position of the switching devices inside the switch and, therefore, the position of the switch itself.

A drawback that affects this type of switch is the inability to establish with certainty whether a trailing has occurred and whether it has exceeded a pre-established switch-point rail displacement value, possibly causing damage to the railroad switch itself.

In fact, the one or more switches present in traditional solutions do not allow one to establish with certainty and reliability whether the trailing has actually occurred or its extent. Known switches are described in the prior documents US20090223791, US10533919B2, US20020171556A1. In particular, these documents describe a switch comprising: a support connectable to a first mechanical component, a tip connectable to a second mechanical component and movable with respect to the support along the direction of impact, a plate element that has a flat or substantially flat surface that extends along a direction transverse to the direction of impact and is connected to the support, in which the flat surface faces the tip, the plate element carrying at least one electrical circuit that mutually connects opposite ends of the plate element, end terminals, for the electrical connection of opposite ends of the electrical circuit and the transmission of a signal through the electrical circuit. The plate element has a weakened portion configured to cause a controlled failure of the plate element when the tip impacts the plate element and passes a predetermined impact position relative to the positioning of the plate element along the impact direction, where failure of the plate element causes an interruption of the electrical circuit.

There is a need in the sector for an alternative and improved device compared to the known technique.

The purpose of the present invention is to detect, remotely, in a certain and reliable manner when two mechanical components have moved relative to each other, along a direction of movement, exceeding a pre-established relative threshold position (threshold displacement).

A further aim of the invention is to detect such a displacement in a reliable manner, which is not affected by external factors such as climatic conditions or any vibrations applied to the mechanical components whose displacement beyond a pre-established threshold value is to be detected.

Another aim of the invention is to detect the mutual movement between two mechanical components, allowing free movement at least until a pre-established threshold value for such movement is reached.

Another aim of the invention is to allow easy installation of a detection unit on board a first mechanical component and a second mechanical component which is intended to monitor the possible reaching and/or exceeding of a pre-established threshold position, as well as its possible maintenance.

The specific object of the invention is a detection unit configured to be connectable to two mechanical components to detect their mutual positioning beyond a predetermined threshold position along an impact direction, comprising:
- a support connectable to a first mechanical component,
- a tip that can be connected to a second mechanical component and moved with respect to the support along the direction of impact,
- a plate element having a flat or substantially flat surface extending along a direction transverse to the direction of impact and connected to the support, where the flat surface faces the tip, the plate element carrying at least one electrical circuit connecting opposite ends of the plate element to each other,
- end terminals, for the electrical connection of opposite ends of the electrical circuit and the transmission of a signal through the electrical circuit,

wherein the plate member has a weakened portion configured to cause a controlled failure of the plate member when the tip impacts the plate member and passes a predetermined impact position relative to the positioning of the plate member along the impact direction, wherein failure of the plate member causes the interruption of the electrical circuit,
wherein the detection unit comprises a first hinge connection and a second hinge connection, independent of each other, connected to the support so as to rotate about a first rotation axis and a second rotation axis respectively, wherein the first rotation axis and the second rotation axis are parallel to each other and spaced apart along the transverse direction, wherein the first hinge connection and the second hinge connection support the plate member by connecting it to the support and are connected to respective portions of the plate member, on opposite sides with respect to the weakened portion.

According to one aspect of the invention, the first hinge connection may comprise a first support connected to the plate member and at least one first pin engaging a delimited opening in the first support, wherein the at least one first pin is in turn connected to the support and wherein the second hinge member comprises a second support connected to the plate member and at least one second pin engaging a delimited opening in the second support, wherein the at least one second pin is in turn connected to the support.

According to an additional aspect of the invention, the detection unit may comprise a first spring element connected to the first hinge connection and a second spring element connected to the second hinge connection, wherein the first spring element and the second spring element each exert a pull on a respective portion of the plate element and are configured to push and hold the respective portions of the plate element apart from each other when the plate element is broken.

According to another aspect of the invention, the first spring element and the second spring element are positioned converging from a rear portion of the support towards a rear portion of the plate element or are parallel to each other.

According to a further aspect of the invention, the detection unit may comprise a first abutment element and a second abutment element connected to the plate element, spaced apart from each other in a position opposite to the weakened portion, wherein the first abutment element and the second abutment element are interposed between the plate element and the tip.

According to an additional aspect of the invention, the support may comprise a removably connectable base portion and a removably connectable top portion, wherein the plate member is removably connected to the support interposed between the base portion and the top portion in proximity to a front end portion of the support.

According to another aspect of the invention, the base portion has a central recess to allow the tip to advance along the direction of impact at least partially inside the support.

According to a further aspect of the invention, the weakened portion can be made centrally to the plate element and is configured as a through slot that extends along a weakening direction perpendicular to the impact direction and to the transverse direction or as a notch or as at least one through opening or as a combination thereof.

According to an additional aspect of the invention, the support can delimit at least one connecting opening engageable by at least one screw, for connecting the support to a first mechanical component and in which the tip delimits at least one respective through seat, engageable by a respective screw, for connecting the tip to a second mechanical component.

According to another aspect of the invention, the railway control unit may comprise a pair of slides, positioned opposite each other and movable along a thrust axis, a pair of connecting arms, each slidingly connected to a respective slide of the slides, wherein each connecting arm is configured to be connected to a respective switch-point rail of a railway switch, wherein the railway control unit comprises a pair of detection units, each of which comprises a support connected to a respective slide and a tip connected to a respective connection arm, wherein the thrust axis is parallel to the direction of impact of each detection unit.

The advantages offered by a detection unit according to the invention are evident.

The detection unit according to the invention, in fact, allows for remote detection, in a certain and reliable manner, when two mechanical components, moving in relation to each other, have moved with respect to each other with a displacement such that the two mechanical components have exceeded a mutual threshold position.

In particular, the detection unit according to the invention is configured to be connected to a mechanical system comprising two mechanical components that can be moved between them. Furthermore, the detection unit according to the invention comprises an electrical circuit that can be interrupted in the event that the two mechanical components exceed a mutual positioning with respect to a predetermined displacement value.

The electrical circuit is an expendable element, that is, it can be broken in such a way as to permanently interrupt the passage of an electrical signal through it.

The absence of this electrical signal, in turn, can be detected by an external monitoring system to which the detection unit can be operationally connected, in a data exchange regime.

Furthermore, the detection unit according to the invention is configured to allow the interruption of the electrical signal in a certain and repeatable manner, regardless of the environmental conditions of the installation site, as well as any mechanical stresses - vibrations - that may act on the detection unit.

The detection unit comprises a plate element carrying an electronic circuit, connectable to a first mechanical component, and a tip connectable to a second mechanical component that can be moved relative to the first mechanical component along an impact direction. The tip is configured to cause the electrical circuit to break when the relative displacement between the first mechanical component and the second mechanical component exceeds a predetermined threshold value.

The break in the electrical circuit, in turn, causes the permanent interruption of a signal through the detection unit, the absence of which is detected by a control group that can be operationally connected to the detection unit itself.

The use of a detection unit according to the invention in a switching unit for a railway switch allows for the remote detection of a trailing condition of the railway switch itself and for its precise and reliable signalling regardless of the conditions that caused the trailing, for example the speed of the train at the switching point or the environmental conditions such as humidity and/or temperature.

Being able to remotely detect reliably and with certainty the achievement of a trailing condition of a railway switch is extremely important from the point of view of the safety of a railway system.

The present invention will now be described, for illustrative but not limitative purposes, according to its preferred embodiments, with particular reference to the Figures of the attached drawings, in which:
Figure 1 shows a top and front perspective view, partially exploded, of a detection unit according to the invention;
Figure 2 shows an exploded front perspective view from below of some components of the detection unit according to the invention;
Figure 3 shows a rear, top, exploded perspective view of the components of the detection unit shown in Figure 2;
Figure 4 shows a bottom perspective view of a detection unit according to the invention;
Figure 5 shows a schematic, detailed perspective view of a railway switch control unit comprising at least one detection unit according to the invention;
Figure 6 shows a schematic, top perspective view of a switching unit for a railway switch comprising a pair of detection units according to the invention.

In the following description, directional terminology such as "right", "left", "front", "rear", "base", "top", "upper", "lower", "side", etc., is used with reference to specific portions of the invention, regardless of the orientation that the same may assume in the various Figures of the attached drawings. Since components and/or elements and/or embodiments of the invention may be positioned in various different orientations, directional terminology is used purely for exemplifying and non-limiting purposes.

The detection unit according to the invention is overall indicated with 1 and is configured, preferably, to equip a switching group of a railway switch to detect any possible trailing.

In this regard, the detection unit 1 is configured to be connected to a first mechanical component and a second mechanical component of the maneuver group, where the second mechanical component is movable relative to the first mechanical component along an impact direction.

It is understood, however, that the detection unit 1 according to the invention can find alternative uses with respect to the aforementioned manoeuvring group, with reference in general to uses in which there is a need to detect in a safe and reliable manner when two mechanical components, movable between them, exceed a pre-established mutual position (threshold position).

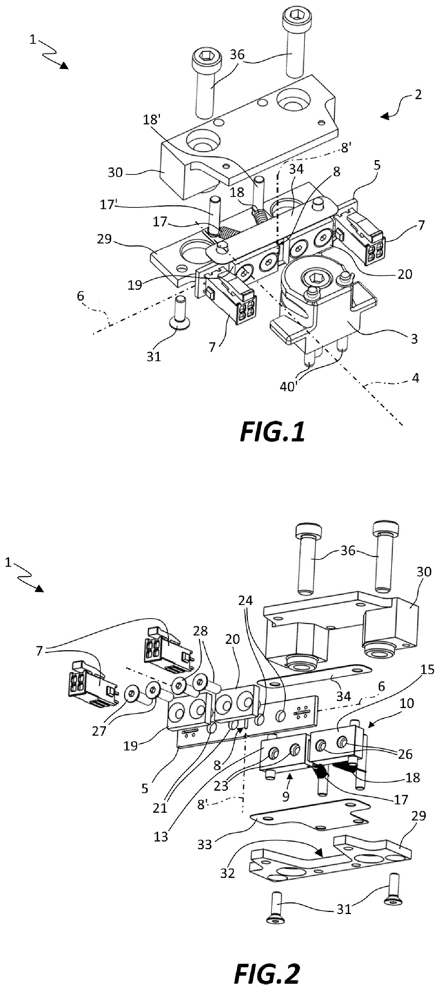

The attached Figures 1-4 show a detection unit in a possible configuration of use, in which the detection unit 1 is not installed on board a first mechanical component and a second mechanical component, to facilitate the understanding of the detection unit 1 itself.

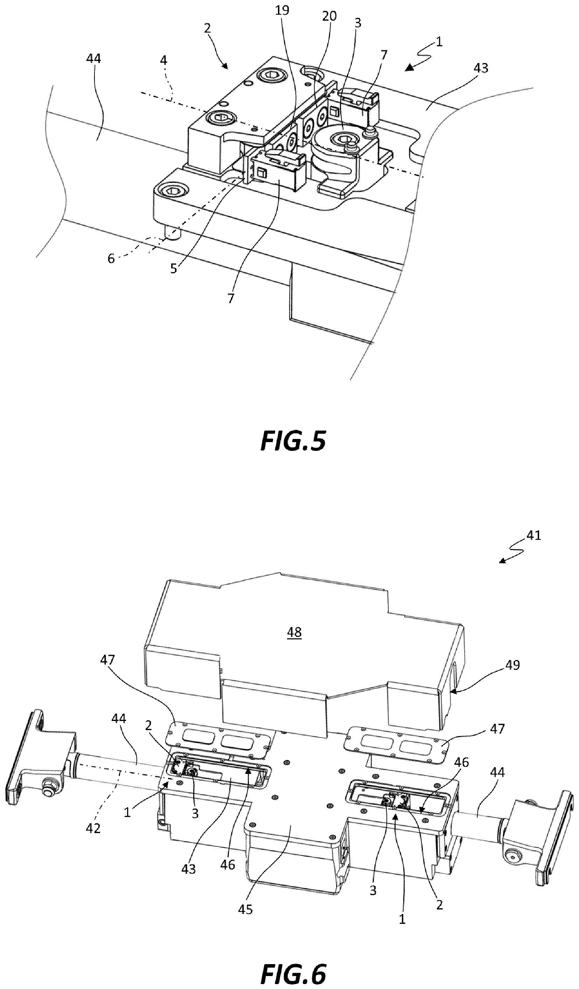

A control unit for a railway switch comprising at least one detection unit 1 indicated above is also the object of the present invention and is shown schematically in the attached Figures 5 and 6.

The detection unit 1 comprises a support 2, connectable to a first mechanical component and a tip 3, connectable to a second mechanical component, wherein the tip 3 can be moved with respect to the support 2 along an impact direction 4.

The detection unit 1 also comprises a plate element 5 which has a flat or substantially flat surface which extends along a transverse direction 6, orthogonal to the impact direction 4, facing the tip 3.

The plate element 5 is connected to the support 2, in correspondence with a frontal portion of the support 2 itself, that is to say a portion of the support 2 which faces the tip 3.

In particular, the plate element 5 is positioned in the support 2 so as to be accessible from the outside of the support 2, near the front portion of the latter.

The plate element 5 carries at least one electrical circuit, for example a printed circuit board, not illustrated in detail in the attached Figures, which extends along the transverse direction 6 and electrically connects opposite ends of the plate element 5.

The detection unit 1, furthermore, comprises end terminals 7 operatively connected to the plate element 5, at opposite ends.

In particular, the end terminals 7 are configured to ensure an electrical connection of opposite ends of the electrical circuit on board the plate element 5 and to allow the transmission of a signal through the same. In other words, the end terminals 7 allow the electrical connection of the detection unit 1, in particular of the electrical circuit included in the plate element 5, to a circuit external to the detection unit 1.

The plate element 5 has a weakened portion 8 which is configured to cause a controlled breakage of the plate element 5 following an impact by the tip 3 which occurs according to predetermined methods. In particular, the plate element 5 is configured to break when the tip 3 reaches or exceeds a predetermined impact position along the impact direction 4 (threshold position) relative to the position of the plate element 5.

In other words, plate element 5 is an "expendable" element, that is, it is designed to be able to sacrifice itself by breaking, thus opening the electrical circuit by interrupting it.

The breakage of the plate element 5, in fact, determines an interruption of the electrical circuit and, therefore, the interruption of a signal through the end terminals 7 which can be detected by a logic control unit present in a circuit to which the detection unit 1 can be connected.

This circuit external to the detection unit 1 does not form a specific object of the invention and will therefore not be described.

The interruption of a signal through the circuit of the plate element 5 indicates, with certainty, that the tip 3 has exceeded a pre-established threshold position along the impact direction 4 relative to the installation direction of the plate element 5 itself in the support 2.

The weakened portion 8 extends centrally along the plate element 5, oriented along a direction 8' orthogonal or substantially orthogonal to the impact direction 4 and the transverse direction 6 (see for example Figure 1).

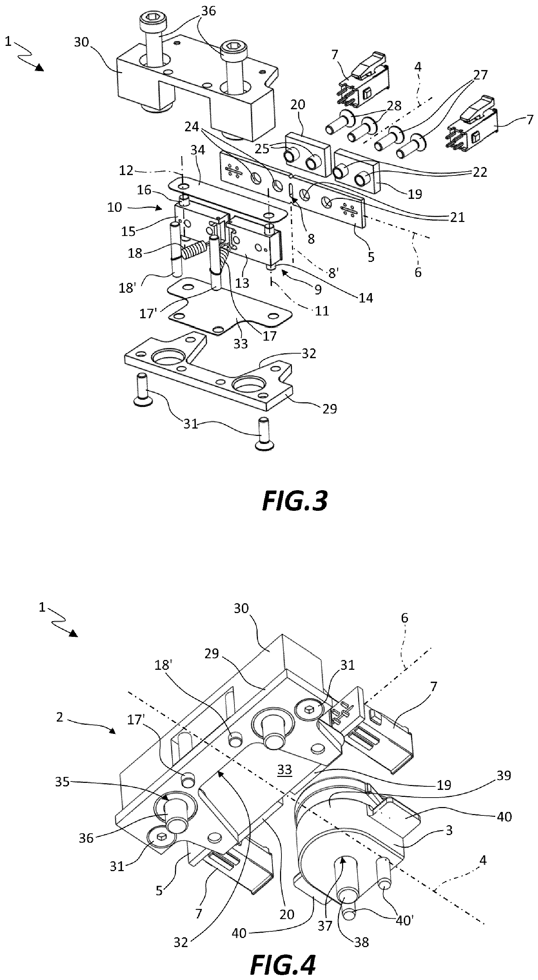

With reference to the embodiment illustrated in the attached Figures, in particular in Figures 2 and 3, the weakened portion 8 is configured as a through slot that extends partially along the plate element 5. It is understood that alternative embodiments are possible, not illustrated in the attached Figures, in which the weakened portion 8 is configured as a notch or as a combination of a through opening and one or more notches.

The plate element 5 is connected to the support 2 via a first hinge connection 9 and a second hinge connection 10, which are separate and independent of each other.

In particular, the first hinge connection 9 and the second hinge connection 10 are connected to the plate element 5 in positions that are specularly opposite to each other and distal to the weakened portion 8.

Following the breakage of the plate element 5, the first hinge connection 9 and the second hinge connection 10 can rotate in opposite directions to each other, approaching a rear portion of the support 2, i.e. a portion opposite to the front portion of the support 2. In other words, the rear portion of the support 2 is opposite to the position of the tip 3 with respect to the plate element 5, along the impact direction 4.

The first hinge connection 9 and the second hinge connection 10 are configured to rotate, respectively, about a first rotation axis 11 and a second rotation axis 12 that are spaced apart and parallel to each other, in a symmetrical or substantially symmetrical position with respect to the weakened portion 8 (see, for example, Figure 3).

In more detail, both the first rotation axis 11 and the second rotation axis 12 are orthogonal to the impact direction 4 and the transverse direction 6.

According to a preferred embodiment, illustrated in the attached Figures, the first hinged connection 9 comprises a first support 13 rotatably connected to the plate element 5, on the opposite side to that against which the tip 3 may abut, and a first pin 14 which is connected to the support 2 and which engages a respective opening or seat delimited through the first support 13 itself.

Similarly, the second hinge connection 10 comprises a second support 15 rotatably connected to the plate element 5, on the opposite side to that against which the tip 3 may abut, and a second pin 16 which is connected to the support 2 and which engages an opening or seat delimited through the second support 15 itself.

With particular reference to Figures 2 and 3, the first pin 14 and the second pin 16 are illustrated engaged respectively in the first support 13 and in the second support 15. It is understood that in place of a first pin 14 passing through the first support 13, two first pins 14 could be provided, each partially engaged inside the first support 13 and protruding outside a respective portion of the top or bottom of the first support 13 itself and, similarly, two second pins 16, each partially engaged inside the second support 15 according to the same methods described in relation to the two first pins 14.

Second, yet another alternative embodiment, the first pin 14 and the first support 13 can be made in a single piece, as can the second pin 16 and the second support 15.

The detection unit 1, furthermore, comprises at least one elastic element operatively connected to the support 2 and to the plate element 5, wherein the at least one elastic element is connected posteriorly to the plate element 5, i.e. to a portion of the plate element 5 opposite the tip 3.

The at least one elastic element is configured to exert a tensile force on the plate element 5, recalling it towards a rear portion of the support 2, for the purposes that will be described below.

According to a preferred embodiment illustrated in the attached Figures 1-4, the detection unit 1 comprises a first elastic element 17, operatively connected to the first hinge connection 9 and a second elastic element 18 operatively connected to the second hinge connection 10.

Preferably, the first spring element 17 and the second spring element 18 are each configured as a spring.

The first elastic element 17 and the second elastic element 18 are connected to respective portions of the support 2, separate from each other, and to respective portions of the plate element 5, in such a way as to each exert a respective traction force on a respective portion of the plate element 5.

In particular, the first elastic element 17 and the second elastic element 18 each have a respective direction of action, i.e. a direction along which they exert their tensile stress. Preferably, the direction of action of the first elastic element 17 and the second elastic element 18 are oriented in such a way as to distance and keep mutually distanced the respective portions of the plate element 5 following a breakage of the latter.

With reference to what is illustrated by way of example in the attached Figures 1 and 3, the first elastic element 17 and the second elastic element 18 are positioned converging starting from a rear portion of the support 2, to which they are connected by means of column elements, towards a rear portion of the plate element 5.

Respectively, the first elastic element 17 is connected to a first column or pin element 17', in turn connected to the support 2, and the second elastic element 18 is connected to a second column or pin element 18', also connected to the support 2.

According to one aspect of the invention, it is highlighted that the first pin 17' and the second pin 18' can be operationally connected to the support 2 so as to partially protrude outwards from it (see for example Figure 4).

According to this configuration, the first pin 17' and the second pin 18' act as reference elements to facilitate the positioning and installation of the support 2 to a first mechanical component.

The arrangement of the elastic elements 17, 18 ensures a mutual separation of the portions of the plate element 5 which are separated from each other following a breakage of the plate element 5 itself.

It is understood that alternative embodiments are possible, not illustrated in the attached Figures, in which the first elastic element 17 and the second elastic element 18 are positioned spaced apart from each other and parallel.

Furthermore, the elastic elements 17, 18 are configured to keep the broken or separated portions of the plate element 5 separated from each other, in particular when the tip 3 is moved away from the plate element 5 and is no longer in contact with it.

Keeping the broken portions of the plate element 5 separate from each other ensures any accidental and unwanted closure, even temporary, of the electrical circuit included in the plate element 5. In particular, it prevents any accidental closure of the electrical circuit following the removal of the tip 3 from the plate element 5 or in the presence of vibrations that act on the detection unit 1 during its use and which, in the absence of the elastic elements 17, 18, could return the broken portions of the plate element 5 to the intact configuration.

In other words, following the breaking of the plate element 5 into two portions, these two separate portions are prevented from returning to their initial position or from approaching each other, ensuring that the electrical circuit is kept open, i.e. that the passage of an electrical signal between the two end terminals 7 is prevented.

The detection unit 1 comprises a first feedback element 19 and a second feedback element 20 connected to the plate element 5, in correspondence with a frontal portion of the plate element 5 itself, i.e. in a position interposed between the plate element 5 and the tip 3 (see, for example, Figures 1 and 4).

The first contact element 19 and the second contact element 20 act as a contact for the tip 3.

In particular, the first abutment element 19 and the second abutment element 20 are connected to the plate element 5 at opposite sides of the weakened portion 8, preferably in a mirror-like or substantially mirror-like position.

In this regard, it should be noted that the first abutment element 19 and the second abutment element 20 are positioned relative to the plate element 5 in such a way as to keep the weakened portion 8 free. In other words, the first abutment element 19 and the second abutment element 20 do not overlap the weakened portion 8, so as not to hinder its possible breakage.

The first contact element 19 and the second contact element 20 prevent the tip 3 from accidentally damaging the circuit present along the plate element 5, in the event that the tip 3 itself contacts the plate element 5 itself without causing its breakage, i.e. without exceeding the pre-established threshold position along the impact direction 4.

Furthermore, the first abutment element 19 and the second abutment element 20 stiffen the plate 5 with the exception of the weakened portion 8, which is free, thus ensuring that any breakage of the plate 5 itself occurs cleanly.

By way of example but not limitation, the first contact element 19 and the second contact element 20 are made of an electrically insulating material.

The first contact element 19 and the second contact element 20 thus made of insulating material prevent the tip 3 from interacting with the electrical parts of the circuit during the initial impact and any subsequent breakage of the circuit itself.

The first abutment element 19 is connected, via a removable connection, for example via at least one screw, to the first support 13 and to the plate element 5, in such a way that a first portion of the plate element 5 is interposed and retained between them.

Similarly, the second abutment element 20 is connected to the second support 15 and to the plate element 5, via a removable connection, for example via at least one screw, so that a second portion of the plate element 5 is interposed and retained between them.

According to a preferred embodiment, the plate element 5 delimits at least a first through opening 21 which can be engaged by a first raised portion 22 which protrudes from one of the first abutment element 19 or the first support 13 and which, in turn, engages a first seat 23 delimited in the other of the first support 13 or the first abutment element 19 (see Figures 2 and 3).

According to this embodiment, the plate element 5 delimits at least a second through opening 24 which can be engaged by a second raised portion 25 which protrudes from one of the second abutment element 20 or the second support 15 and which, in turn, engages a second seat 26 delimited in the other of the second support 15 or the second abutment element 20.

As mentioned, the first abutment element 19 is connected to the first support 13 via at least one first screw 27 and, similarly, the at least one second abutment element 20 is connected to the second support 15 via at least one second screw 28 (see, for example, Figures 2 and 3).

With reference to the exploded views illustrated in Figures 2 and 3, the first abutment element 19 has two first raised portions 22 which each engage a respective first through opening 21 delimited through the plate element 5 and a respective first seat 23 delimited in the first support 13.

Still with reference to the attached Figures 2 and 3, the second abutment element 20 has two second raised portions 25 which each engage a respective second through opening 24 delimited by the plate element 5 and a respective second seat 26 delimited in the second support 15.

The first screws 27 and the second screws 28 engage openings delimited respectively by the first abutment element 19 and the first support 13 and the second abutment element 20 and the second support 15.

The first raised portions 22, the first through openings 21 and the first seats 23 facilitate the relative positioning and mutual connection between the first abutment element 19, the plate element 5 and the first support 13. Similarly, the second raised portions 25, the second through openings 24 and the second seats 26 facilitate the positioning and mutual connection between the second abutment element 20, the plate element 5 and the second support 15.

Ensuring correct positioning between the plate element 5, the first support 13, the second support 15, the first contact element 19 and the second contact element 20 ensures, in a practical and repeatable manner, correct relative positioning between the plate element 5 and the support 2. Consequently, correct relative positioning is ensured between the impact portion of the plate element 5 with respect to the tip 3, thus ensuring correct positioning of the threshold point along the impact direction 4.

According to an alternative embodiment, not illustrated in the attached Figures, the first abutment element 19 and the second abutment element 20 are permanently connected to the plate element 5, for example by gluing.

With reference to the embodiment illustrated in the attached Figures, the support 2 comprises a base portion 29 and a top portion 30, which can be connected to each other in a removable manner, for example by means of screws 31 or a bolted connection or similar.

By removing the base portion 29 from the top portion 30, if necessary, convenient access is provided to the plate element 5 as well as the spring elements 17, 18, the first hinge connection 9 and the second hinge connection 10 (see for example Figure 1).

The plate element 5 is connected to the support 2 in a position interposed between the base portion 29 and the top portion 30, as mentioned, in correspondence with the front portion of the support 2.

In more detail, the base portion 29 and the top portion 30 delimit between them a compartment for housing the plate element 5, in which this compartment is also configured to allow the movement of the first hinge connection 9 and the second hinge connection 10 following a possible breakage of the plate element 5.

It is understood that an alternative embodiment is possible, not illustrated in the attached Figures, in which the support 2 is made in a single body to which the first hinge connection 9, the second hinge connection 10, the first elastic element 17, the second elastic element 18 and the plate element 5 can be connected.

According to an embodiment illustrated in the attached Figures, the base portion 29 is configured as a plate-like or flat element.

In particular, the base portion 29 delimits a central recess 32 in correspondence with the front portion of the support 2, in which such central recess 32 develops posteriorly with respect to the plate element 5, when the latter is connected to the support 2 (see, for example, Figure 4).

The central recess 32 allows the tip 3 to advance along the impact direction 4 at least partially inside the support 2, or in other words inside the plan space of the support 2, so that it can possibly exceed the pre-established threshold position and cause the breakage of the plate element 5.

The detection unit 1 comprises a first insulation element 33 interposed between the plate element 5 and the support 2. In particular, the insulation element 33 is interposed between the plate element 5 and the base portion 29 of the support 2.

Preferably the first insulation element 33 is shaped as a foil or similar.

With reference to the embodiment illustrated in detail in the attached Figures 2 and 3, the first insulation element 33 is constrained to the support 2 by exploiting the connection points of the first hinged connection 9 and of the second hinged connection 10 to the support 2 and possibly of the elastic elements 17, 18 to the support 2 itself.

In this regard, the first insulating element 33 delimits through openings that can be engaged at least by the first pin 14 and the second pin 16.

It is understood that according to alternative embodiments not illustrated in the attached Figures, the first insulation element 33 is connected to the support 2 via a respective threaded connection, or permanently, for example by gluing.

It should be noted that the first isolation element 33 is configured in such a way as to allow the impact between the tip 3 and the plate element 5 and not to hinder the movement of the tip 3 itself in the vicinity of the plate element 5.

The detection unit 1 comprises a second insulation element 34 placed between the plate element 5 and the support 2, in a position opposite to the first insulation element 33.

The second insulation element 34 is interposed between the plate element 5 and the top portion 30.

The first insulating element 33 and the second insulating element 34 electrically isolate the plate element 5, and the electrical circuit included therein, from the support 2, to prevent the latter from accidentally acting as an electrical bridge between the two end terminals 7.

As mentioned, the detection unit 1 is configured to be connected to a first mechanical component and to a second mechanical component, movable with respect to the first component, to verify whether the second component exceeds a pre-established threshold position relative to the first component, along the impact direction 4.

In this regard, the support 2 delimits at least one connection opening 35 which can be engaged by a screw or bolt or similar, for connecting the support 2 to a first component, external to the detection unit 1.

Similarly, the tip 3 delimits at least one respective through seat 37 which can be engaged by at least one respective screw 38, for connecting the tip 3 to a second component external to the detection unit 1 (see Figure 4).

With reference to the embodiment of the tip 3 shown as an example but not limited to in the attached Figures, it should be noted that the tip 3 itself has a first abutment portion 39, configured to selectively abut against the plate element 5 and, specifically, against the first abutment element 19 and the second abutment element 20.

The first abutment portion 39 is shaped rounded or curved or has at least one vertex portion that protrudes frontally, i.e. it protrudes towards the plate element 5.

The first abutment portion 39 thus shaped facilitates the relative sliding of both the first abutment element 19 and the second abutment element 20 with respect to the first abutment portion 39. In this way, jamming or snagging between the tip 3 and the plate element 5 is avoided.

The tip 3 delimits the at least one respective through seat 37 for the connection of the tip 3 itself to a second mechanical component.

Optionally, the tip 3 has at least one stop portion 40, which extends from the tip 3 and is configured to abut against a front portion of the support 2 to define a stop or end-of-travel position of the tip 3 relative to the support 2, along the impact direction 4.

By way of example but not limitation, the at least one stop portion 40 extends laterally from the tip 3, i.e. along a direction perpendicular to the direction of impact 4.

With reference to the embodiment shown in the attached Figures 1 and 4, the tip 3 comprises a pair of stop portions 40 that protrude from opposite sides of the tip 3, with respect to the direction of impact 4.

Each of the stop portions 40 is shaped like an appendage that protrudes laterally from the tip 3, for example like a pin or relief or similar, capable of defining a stop to prevent the advancement of the tip 3 with respect to the support 2 beyond a pre-established limit position, to avoid damaging the support 2 itself and the components connected to it (with the exception of the plate element 5 which, as described above, is configured to be broken into two portions by the tip 3).

The tip 3 has at least one reference element 40' which protrudes downwards from the tip 3 itself and is configured to act as a reference and facilitate correct positioning of the tip 3 on a second mechanical component.

With reference to the embodiment illustrated as an example in the attached Figure 4, the tip 3 has two reference elements 40', spaced apart from each other, which are configured as pins suitable for engaging respective seats, not illustrated in the attached Figures, which in turn are delimited in a second mechanical component, to which the tip 3 is intended to be connected.

By way of example but not limitation, the at least one reference element 40' is shaped like a pin, although it is understood that alternative embodiments with a different shape are possible, for example with a square, rectangular or elliptical plan, not illustrated in the attached Figures.

In practice, the at least one reference element 40' performs a similar function to that described in relation to the positioning of the support 2 with respect to a first mechanical component using the first pin 17' and the second pin 18'.

According to a preferred embodiment, illustrated in the attached Figures 5 and 6, the detection unit 1 is configured to be installed on a switching group of a railway switch, indicated overall with 41.

The control group 41 is of the off-trail type, although it is understood that the detection unit 1 can equally be used in a control group of the on-trail type.

A control unit 41 comprising at least one detection unit 1 according to the invention is also the subject of the invention.

The specific conformation of a 41 control unit, its operation and that of its internal organs and devices are considered within the reach of a person skilled in the sector.

Therefore, the description of the control unit 41 will be limited to those features necessary to understand the operation of the detection unit 1 when installed in the control unit 41.

In general, a switch assembly 41 comprises a sturdy container configured to be fixed to a railroad switch sleeper.

As is known, a control unit 41 comprises two slide units 43, each of which is operationally connected to a respective switch-point rail (according to methods not illustrated in the attached Figures) to move it smoothly along a thrust axis 42 (see Figure 6).

In particular, each of the slide groups comprises a slide 43 to which a connecting arm 44 is slidably connected, which, in turn, is connected to a respective switch-point rail (see Figure 6). The detection unit 1 is operationally connected to a slide group 43, to detect any possible trailing.

In particular, the support 2 is connected to the slide 43 while the tip 3 is connected to the connecting arm 44. In other words, the slide 43 corresponds to the first mechanical component previously described while the connecting arm 44 corresponds to the second mechanical component.

According to this use of the detection unit 1, the support 2 and the tip 3 are positioned along the slide group 43 in such a way that the pre-established threshold position between the tip 3 and the plate element 5 corresponds to the position in which an open switch-point rail, connected to the connecting arm 44, is moved following the trailing action of a train travelling along such open switch-point rail.

It is highlighted that the impact direction 4 is aligned parallel to the thrust axis 42.

Furthermore, the detection unit 1 is positioned near a top portion of the control group 41, to be easily accessible.

The contact of the switch-point rail causes the tip 3 to move beyond the pre-established threshold position along the impact direction 4, causing an impact between the tip 3 and the plate element 5 such as to cause a certain breakage of the plate element 5 itself and, therefore, the interruption of the passage of a signal through the electrical circuit positioned therein.

The interruption of the electrical circuit determines the absence of an electrical signal through the detection unit 1, an absence which can be detected by a control system which can be operationally connected to the end terminals 7.

According to one aspect of the invention, the control unit 41 includes a top cover 45 that occludes one top of the control unit 41, protecting the internal components.

The top cover 45 delimits at least one pair of shaped openings 46, each positioned in correspondence with the installation point of the detection unit 1, on board the manoeuvring group 41, through which it is possible to access the inside of the manoeuvring group 41 itself to reach each detection unit 1.

The operating group 41 includes respective closing covers 47, for closing a respective one of the shaped openings 46.

According to a preferred embodiment, each of the closing covers 47 comprises at least one transparent portion through which it is possible to view the inside of the operating group 1 and, in particular, the detection unit 1.

The presence of closing covers 47 facilitates access to the individual detection units 1, facilitating any maintenance or replacement.

The control unit 41 comprises an external shell 48, which can be positioned above the top cover 45 and is shaped to cover the control unit 41 itself in order to protect it.

The outer shell 48 has lateral grooves 49 to allow the passage and movement of each connecting arm 44 along the thrust axis 42.

With reference to what has been previously described, it is evident that the detection unit 1 according to the invention is able to achieve the intended purposes.

In fact, the detection unit 1 is able to interrupt the transmission of a signal through an electrical circuit in a precise and certain manner when the movement between two mechanical components to which the detection unit 1 is operationally connected exceeds a pre-established threshold value.

In particular, the detection unit 1 is configured to ensure that the breaking of the electrical circuit occurs only when a pre-established displacement between the two mechanical components along an impact direction is exceeded, subsequently preventing an accidental closure of the circuit when the two mechanical components are again moved away from each other.

Furthermore, the detection unit 1 has an easily assembled structure to be able to be mounted on the two mechanical components and to allow a quick and easy replacement of the plate element 5 if it is broken (on purpose), or of the entire detection unit 1, thus allowing the group itself to be made operational again.

It follows that simplifying the maintenance of detection unit 1 reduces the time required to make a railway shunting group operational again, with the resulting benefits.

In the foregoing, preferred embodiments have been described and variations of the present invention have been suggested, but it is to be understood that those skilled in the art may make modifications and changes without thereby departing from the scope of protection as defined by the appended claims.

## Claims

1. Detection unit (1) configured to be connectable to two mechanical components, to detect their mutual positioning relative to a pre-established threshold position along an impact direction (4), comprising:
- a support (2) connectable to a first mechanical component,
- a tip (3) connectable to a second mechanical component and movable with respect to said support (2) along said impact direction (4),
- a plate element (5) having a flat or substantially flat surface extending along a direction transverse (6) to said impact direction (4) and connected to said support (2), where said flat surface faces said tip (3), said plate element (5) carrying at least one electrical circuit which mutually connects opposite ends of said plate element (5),
- end terminals (7), for the electrical connection of opposite ends of said electrical circuit and for the transmission of a signal through said electrical circuit,
- a first hinge connection (9) and a second hinge connection (10), independent of each other, connected to said support (2) so as to rotate respectively around a first rotation axis (11) and a second rotation axis (12),
wherein said plate element (5) has a weakened portion (8) configured to cause a controlled rupture of said plate element (5) when said tip (3) impacts against said plate element (5) and passes a predetermined impact position with respect to the positioning of said plate element (5) along said impact direction (4), wherein the rupture of said plate element (5) causes the interruption of said electrical circuit,
wherein said first axis of rotation (11) and said second axis of rotation (12) are parallel to each other and spaced along said transverse direction (6),
the detection unit being **characterized in that** said first hinge connection (9) and said second hinge connection (10) support said plate element (5) by connecting it to said support (2) and are connected to respective portions of said plate element (5), from opposite sides with respect to said weakened portion (8).

2. Detection unit (1) according to claim 1, wherein said first hinge connection (9) comprises a first support (13), connected to said plate element (5) and at least one first pin (14) engaging a delimited opening in said first support (13), wherein said at least one first pin (14) is in turn connected to said support (2) and wherein said second hinge connection (10) comprises a second support (15), connected to said plate element (5) and at least one second pin (16) engaging a delimited opening in said second support (2), wherein said at least one second pin (16) is in turn connected to said support (2).

3. Detection unit (1) according to claim 1 or 2, comprising a first elastic element (17) connected to said first hinge connection (9) and a second elastic element (18) connected to said second hinge connection (10), wherein said first elastic element (17) and said second elastic element (18) each exert a traction on a respective portion of said plate element (5) and are both configured to move said respective portions of said plate element (5) apart and keep them mutually apart following a breakage of said plate element (5).

4. Detection unit (1) according to claim 3, wherein said first elastic element (17) and said second elastic element (18) are positioned converging starting from a rear portion of said support (2) towards a rear portion of said plate element (5) or are parallel to each other.

5. Detection unit (1) according to any of the preceding claims, comprising a first abutment element (19) and a second abutment element (20) connected to said plate element (5), spaced apart from each other in an opposite position with respect to said weakened portion (8), wherein said first abutment element (19) and said second abutment element (20) are interposed between said plate element (5) and said tip (3).

6. Detection unit (1) according to any of the preceding claims, wherein said support (2) comprises a base portion (29) and a top portion ( 30) removably connectable to each other, wherein said plate element (5) is removably connected to said support (2) in a position interposed between said base portion (29) and said top portion (30) in proximity to a front end portion of said support (2).

7. Detection unit (1) according to claim 6, wherein said base portion (29) has a central recess (32) to allow the advancement of said tip (3) along said impact direction (4) at least partially inside said support (2).

8. Detection unit (1) according to any of the preceding claims, wherein said weakened portion (8) is made centrally to said plate element (5) and is configured as a through slot which extends along a weakening direction (8') perpendicular to said impact direction (4) and to said transverse direction (6) or as a notch or as at least one through opening or as a combination thereof.

9. Detection unit (1) according to any of the preceding claims, wherein said support (2) delimits at least one connecting opening (35) engageable by at least one screw (36), for the connection of said support (2) to a first mechanical component and wherein said tip (3) delimits at least one respective through seat (37), engageable by a respective screw (38), for the connection of said tip (3) to a second mechanical component.

10. Railway control unit (41) comprising a pair of slides (43), positioned opposite each other and movable along a thrust axis (42), a pair of connecting arms (44), each slidingly connected to a respective slide of said slides (43), wherein each connecting arm (44) is configured to be connected to a respective switch-point rail of a railway switch, wherein said railway control unit (41) comprises a pair of detection units (1) according to any of claims 1 to 9, each of which comprises a support (2) connected to a respective slide (43) and a tip (3) connected to a respective connection arm (44), wherein said thrust axis (42) is parallel to said impact direction (4) of each detection unit (1).
